# EUROPÄISCHE PATENTSCHRIFT

(11) **EP 3 106 782 B1**
(45) Veröffentlichungstag und Bekanntmachung des Hinweises auf die Patenterteilung: **29.11.2017**
(21) Anmeldenummer: 16174767.0
(22) Anmeldetag: 16.06.2016
(51) Int. Cl.: F25B 27/02, F25B 29/00

(54) **ABSORPTIONSWÄRMEPUMPE MIT EINEM DURCH EINEN BRENNER BEHEIZTEN, AN EINEN RAUCHGASABZUG ANGESCHLOSSENEN DESORBER**
ABSORPTION HEAT PUMP WITH A DESORBER CONNECTED TO A FLUE GAS DISCHARGE SYSTEM HEATED BY A BURNER
POMPE A CHALEUR A ABSORPTION COMPRENANT UN DESORBER RACCORDE A UN CONDUIT DE DECHARGE DE GAZ DE FUMEE CHAUFFE PAR UN BRULEUR

(30) Priorität: 18.06.2015 AT 505122015
(43) Veröffentlichungstag der Anmeldung: 21.12.2016
(73) Patentinhaber: Technische Universität Graz, 8010 Graz (AT)
(72) Erfinder: Zotter, Gerald, 8010 Graz (AT); Rieberer, René, 8043 Graz (AT)
(74) Vertreter: Patentanwaltskanzlei Hübscher

(56) Entgegenhaltungen:
- EP-A2- 1 391 665
- EP-A2- 2 669 601
- US-A- 4 270 365

## Beschreibung

Die Erfindung bezieht sich auf eine Absorptionswärmepumpe mit einem durch einen Brenner beheizten, an einen Rauchgasabzug angeschlossenen Desorber, mit einem Lösungsmittelkreis und einem einen Kondensator und einen Verdampfer umfassenden Kältemittelkreis zwischen dem Desorber und einem Absorber sowie mit einem Rauchgaskondensator im Rauchgasabzug. US 4,270,365 A1 offenbart eine Absorptionswärmepumpe gemäß dem Oberbegriff des Anspruchs 1. Absorptionswärmepumpen, die direkt mithilfe von Gas oder flüssigen Brennstoffen befeuert werden, weisen wegen der Möglichkeit, zusätzlich Umweltwärme, beispielsweise aus Luft, Wasser oder Erdreich, zu nützen, einen deutlich höheren Wirkungsgrad als vergleichbare Heizkessel auf. Direkt befeuerte Absorptionswärmepumpen bieten sich daher insbesondere für die Umrüstung bestehender, mit Gas oder Öl befeuerter Heizkessel für Gebäudeheizungen an, die für ein vergleichsweise hohes Temperaturniveau ausgelegt sind, bei dem herkömmliche Kompressionswärmepumpen nur mit einer geringeren Effizienz betrieben werden können.
Um die latente Kondensationswärme des Wasserdampfs in den Rauchgasen nutzen zu können, die bei der direkten Befeuerung des Desorbers der Absorptionswärmepumpe mit Gas oder Öl anfallen, ist es bekannt, einen Rauchgaskondensator in den Rauchgasabzug einzuschalten und diesen Rauchgaskondensator mit dem Rücklauf des Heizungswassers zu beaufschlagen. Damit wird die Rücklauftemperatur des Heizungswassers maßgebend für den Kondensationswärmegewinn. Steigt nämlich die Rücklauftemperatur des Heizungswassers über den Taupunkt des Dampfs in den Rauchgasen an, womit bei bekannten für den Betrieb mit Heizkesseln ausgelegten Gebäudeheizungen durchaus zu rechnen ist, kann keine Kondensation des Rauchgasdampfs mehr stattfinden.

Der Erfindung liegt somit die Aufgabe zugrunde, die latente Kondensationswärme der Rauchgase direkt befeuerter Absorptionswärmepumpen zur Wirkungsgradsteigerung vorteilhaft zu nutzen.

Ausgehend von einer Absorptionswärmepumpe der eingangs geschilderten Art löst die Erfindung die gestellte Aufgabe dadurch, dass der Rauchgaskondensator in den Kältemittelkreis zwischen dem Verdampfer und dem Absorber eingebunden ist.

Da bei einer Absorptionswärmepumpe das aus dem Verdampfer strömende Kältemittel ein niedriges Temperaturniveau häufig im Bereich von unter 0 °C aufweist, wird bei einer Beaufschlagung des Rauchgaskondensators mit dem Kältemittel aus dem Verdampfer eine Kondensation des in den Rauchgasen enthaltenen Wasserdampfs unabhängig von der Rücklauftemperatur des Heizungswassers sichergestellt. Die freigesetzte Kondensationswärme wird vom Kältemittel aufgenommen, das anschließend im Absorber vom Lösungsmittel absorbiert wird, wobei die abzuführende Lösungswärme zum Wärmen von Heizungswasser genützt werden kann. Die Kondensationswärme aus dem Rauchgaskondensator wird somit im Absorber auf ein für das Heizungssystem nutzbares Temperaturniveau angehoben. Außerdem können durch die bessere Nutzung der dem Desorber zur Verfügung gestellten Antriebswärme der Verdampfer der Absorptionswärmepumpe und damit auch die für den Verdampfer vorgesehene Wärmequelle kleiner ausgelegt werden.

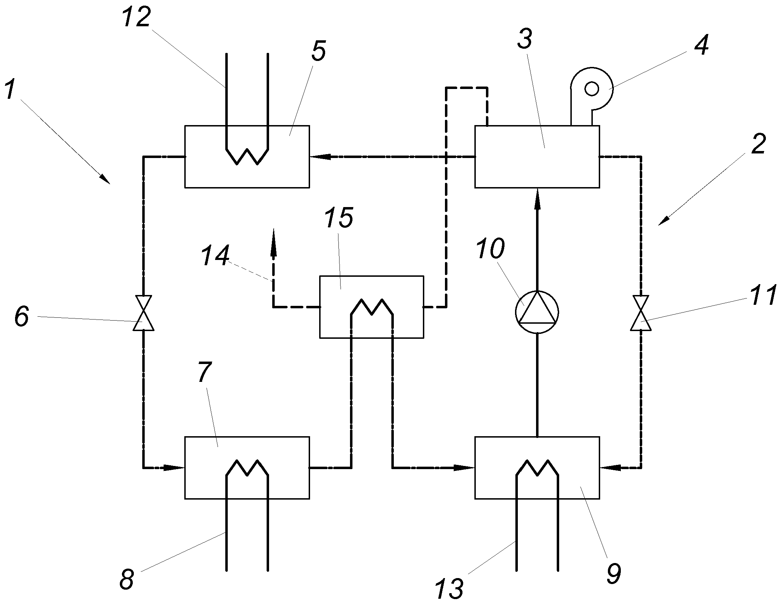

In der Zeichnung ist der Erfindungsgegenstand beispielsweise dargestellt, und zwar wird eine erfindungsgemäße Absorptionswärmepumpe in einem schematischen Blockschaltbild gezeigt.

Die dargestellte Absorptionswärmepumpe umfasst gemäß dem Blockschaltbild einen einerseits an einen Kältemittelkreis 1 und anderseits an einen Lösungsmittelkreis 2 angeschlossenen Desorber 3, der über einen mit Gas oder Öl betriebenen Brenner 4 mit der notwendigen Antriebswärme versorgt wird. Der Kältemittelkreis 1 weist in herkömmlicher Art einen Kondensator 5, eine Kältemitteldrossel 6 und einen Verdampfer 7 auf, der beispielsweise über einen Kreis 8 mit Umweltwärme beaufschlagt wird. Der Kältemitteldampf wird anschließend in einem Absorber 9 in einem Lösungsmittel unter Wärmeabgabe vollständig absorbiert, bevor die Lösung aus dem Lösungsmittel und dem Kältemittel mithilfe einer Lösungspumpe 10 mit einem entsprechenden Druck dem Desorber 3 zugeführt wird, in dem das Kältemittel durch Wärmezufuhr wieder vom Lösungsmittel getrennt wird. Während das Lösungsmittel über eine Lösungsmitteldrossel 11 entspannt dem Absorber 9 im Kreislauf zugeführt wird, strömt das erwärmte, dampfförmige Kältemittel zum Kondensator 5 des Kältemittelkreises 1, wo es seine Wärme an Heizungswasser abgibt, das über einen Heizungswasseranschluss 12 zugeführt wird. Das im Kondensator 5 kondensierte Kältemittel wird durch die Kältemitteldrossel 6 entspannt und verdampft unter Aufnahme der Umweltwärme im Verdampfer 7 bei einem vergleichsweise niedrigen Temperaturniveau. Die bei der Absorption des Kältemitteldampfs im Lösungsmittel im Absorber 9 anfallende Lösungswärme wird zur Erwärmung des Heizungswassers genützt, dessen Anschluss an den Absorber mit 13 bezeichnet ist. Mit der Förderung der Lösung aus dem Absorber 9 zum Desorber 3 schließt sich der Kreislauf.

Um die latente Kondensationswärme des in den Rauchgasen aus dem Brenner 4 enthaltenen Wasserdampfs vorteilhaft nützen zu können, ist im Rauchgasabzug 14 ein Rauchgaskondensator 15 vorgesehen, der vom verdampften Kältemittel aus dem Verdampfer 7 des Kältemittelkreises 1 beaufschlagt wird. Das niedrige Temperaturniveau dieses Kältemitteldampfs stellt sicher, dass der Taupunkt des in den Rauchgasen enthaltenen Wasserdampfs stets unterschritten wird und die latente Kondensationswärme der Rauchgase vorteilhaft genützt werden kann, und zwar bei einem für die Heizungswassererwärmung angemessenen Temperaturniveau durch die im Absorber anfallende Lösungswärme. In diesem Zusammenhang ist darauf zu verweisen, dass der Gewinn an Kondensationswärme mit abnehmender Temperatur der Rauchgaskondensation steigt.

Es braucht wohl nicht besonders hervorgehoben zu werden, dass das Blockschaltbild lediglich das grundsätzliche Prinzip einer Absorptionswärmepumpe wiedergibt und nicht auf zusätzliche Maßnahmen zu einer optimalen Wärmeführung eingeht. Es fehlen beispielsweise hierfür vorgesehene Wärmetauscher zwischen dem kondensierten Kältemittel und dem verdampften Kältemittel im Kältemittelkreis 1 sowie zwischen dem armen Lösungsmittel und der reichen Lösung im Lösungsmittelkreis 2 oder einem zusätzlichen Wärmeaustausch zwischen Absorber 9 und Desorber 3.

## Patentansprüche

1. Absorptionswärmepumpe mit einem durch einen Brenner (4) beheizten, an einen Rauchgasabzug (14) angeschlossenen Desorber (3), mit einem Lösungsmittelkreis (2) und einem einen Kondensator (5) und einen Verdampfer (7) umfassenden Kältemittelkreis (1) zwischen dem Desorber (3) und einem Absorber (9) sowie mit einem Rauchgaskondensator (15) im Rauchgasabzug (14), **dadurch gekennzeichnet, dass** der Rauchgaskondensator (15) in den Kältemittelkreis (1) zwischen dem Verdampfer (7) und dem Absorber (9) eingebunden ist.

## Claims

1. Absorption heat pump having a desorber (3) heated by a burner (4) and connected to a flue gas outlet (14), having a solvent circuit (2) and a coolant circuit (1), which incorporates a condenser (5) and an evaporator (7), between the desorber (3) and an absorber (9), and having a flue gas condenser (15) in the flue gas outlet (14), **characterised in that** the flue gas condenser (15) is integrated into the coolant circuit (1) between the evaporator (7) and the absorber (9).

## Revendications

1. Pompe à chaleur à absorption avec un désorbeur (3) chauffé par un brûleur (4), raccordé à une évacuation de gaz brûlés (14), avec un circuit de solvant (2) et un circuit de fluide réfrigérant (1), comprenant un condenseur (5) et un évaporateur (7), entre le désorbeur (3) et un absorbeur (9), ainsi qu'avec un condenseur de gaz brûlés (15) dans l'évacuation de gaz brûlés (14), **caractérisé en ce que** le condenseur de gaz brûlés (15) est intégré dans le circuit de fluide réfrigérant (1) entre l'évaporateur (7) et l'absorbeur (9).
